# EUROPEAN PATENT APPLICATION

(11) **EP 3 042 840 A1**
(43) Date of publication of application: **13.07.2016**
(21) Application number: 16150395.8
(22) Date of filing: 07.01.2016
(51) Int. Cl.: B62M 25/08, B62K 23/02

(54) **NON-CONTACT OPERATION DEVICE FOR BICYCLE**

(30) Priority: 06.01.2015 TW 104200128
(71) Applicant: J.D Components Co., Ltd., Shou Shui Hsiang, Chang Hua Hsien (TW)
(72) Inventor: Yang, Yao-Ming, Chang Hua Hsien (TW); Huang, Chun-Wei, 522 Changhua County (TW)
(74) Representative: Straus, Alexander

(57) **Abstract**

A non-contact operating device (10) for a bicycle includes a mount (20) and two light sensors (30). The mount (20) has two sensing portions (22), and each of the light sensors (30) located in one of the sensing portions (22) of the mount (20). For an operational need, a cyclist riding the bicycle can trigger one of the light sensors (30) by moving his/her thumb to cover that light sensor (30), and the triggered light sensor (30) sends a sensing signal correspondingly to a controller, so that the controller performs a desired operation according to the received sensing signal.

## Description

### BACKGROUND OF THE INVENTION

### 1. Technical Field

The present invention relates to bicycles, and more particularly to a non-contact operating device for a bicycle.

### 2. Description of Related Art

In a bicycle, controls for functions such as gear shifting, seat-angle adjustment and seat-tube adjustment are traditionally integrated in a control panel for a cyclist to operate and realize the corresponding functions.

There are situations where a cyclist needs to repeatedly operate the same button. For example, when cycling along an undulate rode, a cyclist may frequently shift gears for effort saving riding. However, since the buttons are closely arranged in the control panel, it is difficult for a cyclist to ride and operate the right button accurately and promptly. Once an accident, improper operation is made, the cyclist is under the risk of accident.

### SUMMARY OF THE INVENTION

The primary objective of the present invention is to provide a non-contact operating device for a bicycle, which enables a cyclist to perform operations accurately and promptly while riding the bicycle.

For achieving the foregoing objective, the disclosed non-contact operating device comprises a mount and at least two light sensors. The mount has at least two separate sensing portions. Each of the light sensors is embedded in one of the sensing portions of the mount. In use, a cyclist riding the bicycle can cover one of the light sensors according to his/her riding needs, so that the light sensor detects the cyclist's hand motion and sends a sensing signal accordingly to a controller, for the controller to perform corresponding functions.

Preferably, the mount further has a switch portion located between the two sensing portions. The switch portion contains therein a power switch that is connected to the two light sensors, for switching on or off each of the light sensors.

Preferably, the non-contact operating device further comprises a flexible display and a physiology sensor. The flexible display is connected to each of the light sensors, for displaying sensing results from the light sensors. The physiology sensor is connected to the flexible display, for monitoring the cyclist's physiological state and displaying sensing results through the flexible display.

### BRIEF DESCRIPTION OF THE DRAWINGS

FIG. 1 is a plane view of a first embodiment of the present invention.
FIG. 2 is a plane view of a second embodiment of the present invention.
FIG.3 is a plane view of a third embodiment of the present invention.
FIG.4 is a perspective view of a fourth embodiment of the present invention, showing the flexible display inactivated.
FIG.5 is a perspective view of the fourth embodiment of the present invention, showing the flexible display activated.

### DETAILED DESCRIPTION OF THE INVENTION

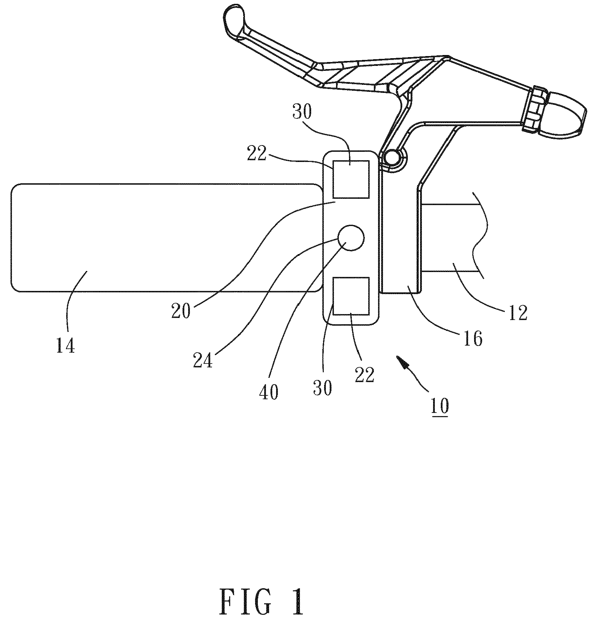

Referring to FIG. 1, according to the first embodiment of the present invention, a non-contact operating device 10 for a bicycle comprises a mount 20 and two light sensors 30.

The mount 20 of the present embodiment is fixed to a handle bar 12 and located between and adjacent to a handle cover 14 and a brake lever base 16. In addition, the mount 20 has two separate sensing portions 22 and a switch portion 24. The switch portion 24 is located between the two sensing portions 22.

Light sensors 30 are embedded in the sensing portions 22 of the mount 20. The light sensors 30 may each be a photointerrupter or an infrared sensor, and they are photointerrupters in the present embodiment. Theses light sensors 30 are mainly configured to detect the cyclist's different hand motions and to send different sensing signals accordingly. Such motions made by the cyclist's hand may be, for example, staying at a certain site on the sensing portion 22, waving in a certain direction with respect to the sensing portion 22, or sticking for a time period on the sensing portion 22.

For preventing batteries in the light sensors 30 from consuming power when not in use and getting drained prematurely, a power switch 40 may be installed in the switch portion 24 of the mount 20 and electrically connected to each of the light sensors 30, for switching on or off the light sensors 30. In the present embodiment, the power switch 40 is preferably but not limited to a light-operated switch, which employs a photoresistor installed therein to detect ambient light variations and turns on or off the light sensors 30 accordingly.

In practical use, the cyclist may first position a thumb on the switch portion 24 of the mount 20 to cover the power switch 40, so that the power switch 40 activates the two light sensors 30 simultaneously. After said activation, the cyclist can, according to his/her riding needs, move his/her thumb forward or backward until it reaches one of the sensing portions 22 of the mount 20. As a result, the light sensor 30 located in that sensing portion 22 is covered and thereby triggered. The triggered light sensor 30 then sends a sensing signal corresponding to the cyclist's hand motion to a controller (not shown). Upon reception of the signal, the controller performs corresponding functional operation, such as gear shifting or seat-tube adjustment. Once the desired operation is done, the cyclist may move his/her thumb back to the switch portion 24 of the mount 20 to make the power switch 30 turn off the two light sensors 30 simultaneously. In this manner, the light sensors 30 remain off when not in use and thereby preventing unnecessary power consumption.

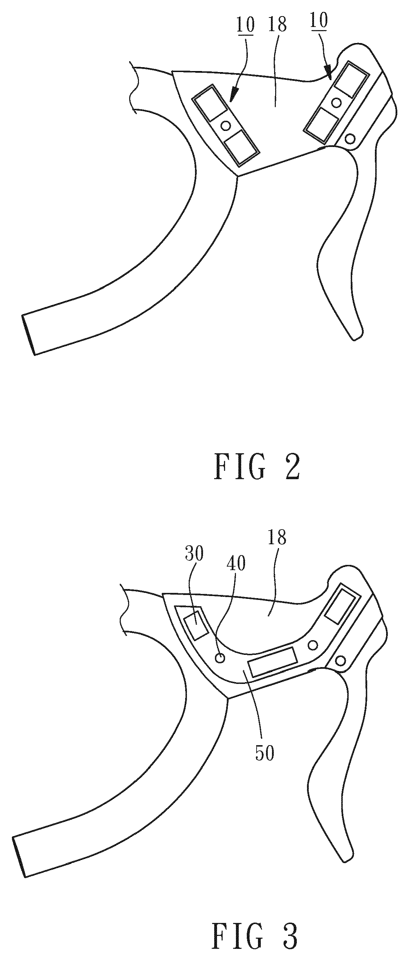

It is to be understood that the numbers, locations and configurations of the disclosed components may be varied from those as described above. For example, two said non-contact operating devices 10 are installed on the same brake lever base 18 in FIG. 2. The two non-contact operating devices 10 may each control a different function. In addition, as shown in FIG. 3, the mount 50 may have a shape that mates the inner periphery of the brake lever base 18. With an increased length of the mount 50, the numbers of the light sensors 30 and the power switches 40 may be correspondingly increased. For an instance shown in FIG. 3, three aforesaid light sensors 30 and two aforesaid power switches 40 are provided. Each said power switch 40 is located between two adjacent said light sensors 30. The individual power switches 40 are configured to activate the light sensors 30 connected thereto, thereby allowing the light sensors 30 to be later triggered for the associated functions.

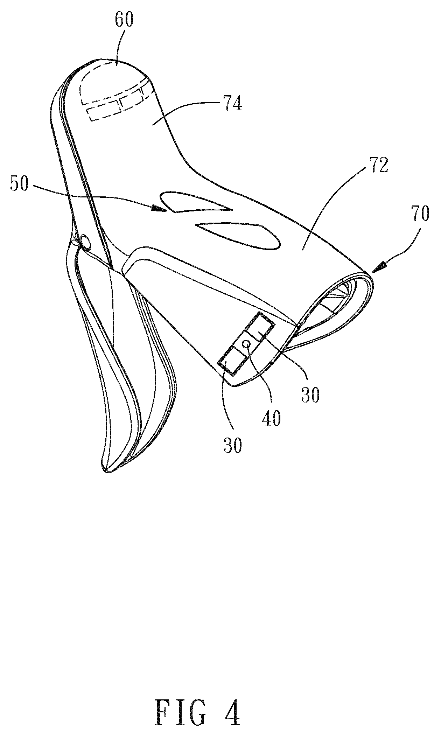

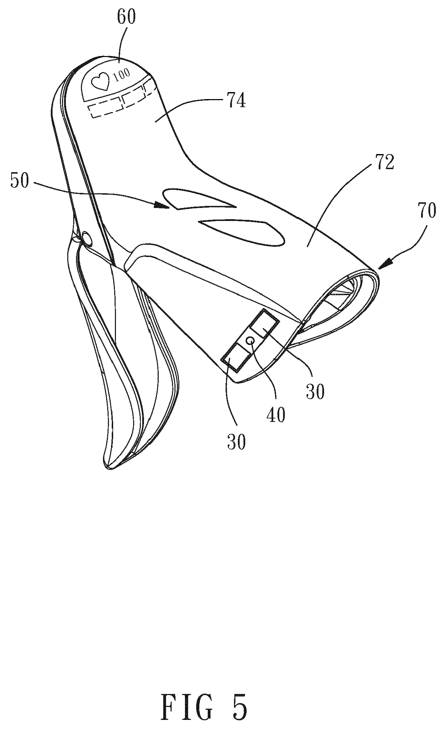

Now referring to FIG. 4, in the depicted embodiment, the disclosed non-contact operating device 10 comprises a physiology sensor 50. The physiology sensor 50 is attached to a grip portion 72 of the handle cover 70 and is connected to the power switch 40. When a cyclist uses his/her thumb to cover the power switch 40, the power switch 40 activates the physiology sensor 50 in addition to the light sensors 30, so that the physiology sensor 50 monitors the cyclist's physiological state (e.g. his/her heart rate) during his/her riding in a real-time manner. Moreover, the disclosed non-contact operating device 10 further comprises a flexible display 60. The flexible display 60 is inlaid at a raised portion 74 of the handle cover 70 and is connected to the power switch 40. When not activated, the flexible display 60 is apparently integrated with the handle cover 70 as a whole and visually vanished (as represented in FIG. 4), so as to exist as a concealed component. When activated by the power switch 40, the flexible display 60 displays information (as shown in FIG. 5), such as the bicycle's speed, the trip distance, the battery life and so on, and also displays the functional operations performed after the light sensors 30 are triggered (e.g. gear shifting or seat-tube adjustment) and the sensing results from the physiology sensor 50 (e.g. his/her heart rate).

To sum up, the disclosed non-contact operating device 10 enables a cyclist to trigger the light sensors 30 accurately and promptly by using his/her hand motions, and ensures that the light sensors 30 are only activated when the cyclist needs them by using the power switch 40 that is controlled by light variations, thereby preventing unnecessary power consumption and in turn maximizing the use life of the device. Also importantly, it uses the physiology sensor 50 to monitor the cyclist's physiological state in a real-time manner and displays information on riding and on sensing through the flexible display 60, thereby optimizing the cyclist's riding.

## Claims

1. A non-contact operating device (10) for a bicycle, the non-contact operating device (10) comprising:
a mount (20, 50), having at least two separate sensing portions (22); and
at least two light sensors (30), each embedded in one of the sensing portions (22) of the mount (20, 50).

2. The non-contact operating device (10) of claim 1, further comprising a power switch (40), wherein the mount (20) further has a switch portion (24) located between the two sensing portions (22), and the power switch (40) is installed on the switch portion (24) of the mount (20) and is connected to the two light sensors (30).

3. The non-contact operating device (10) of claim 1, wherein the light sensor (30) is a photointerrupter or an infrared sensor.

4. The non-contact operating device (10) of claim 1, wherein the light sensor (30) is configured to detect a hand motion of a cyclist of the bicycle and send a sensing signal accordingly.

5. The non-contact operating device (10) of claim 4, wherein the hand motion is staying at a certain site on the sensing portion (22), waving in a certain direction with respect to the sensing portion (22), or sticking for a time period on the sensing portion (22).

6. The non-contact operating device (10) of claim 1, further comprising a handle cover (70) and a flexible display (60), wherein the flexible display (60) is inlaid in the handle cover (70) and connected to each of the light sensors (30), for displaying sensing results from the light sensors (30).

7. The non-contact operating device (10) of claim 6, further comprising a power switch (40), wherein the mount (50) further has a switch portion (24) located between the two sensing portions (22), and the power switch (40) is installed on the switch portion (24) of the mount (50) and is connected to each said light sensor (30) and the flexible display (60).

8. The non-contact operating device (10) of claim 6, further comprising a physiology sensor (80), wherein the physiology sensor (80) is attached to the handle cover (70) and connected to the flexible display (60) for detecting a physiological state of a cyclist of the bicycle, so as to enable the flexible display (60) to display sensing results from the physiology sensor (80).

9. The non-contact operating device (10) of claim 8, further comprising a power switch (40), wherein the mount (50) further has a switch portion (24) located between the two sensing portions (22), and the power switch (40) is installed on the switch portion (24) of the mount (50) and is connected to each said light sensor (30), the flexible display (60) and the physiology sensor (80).
